# EUROPEAN PATENT SPECIFICATION

(11) **EP 3 690 135 B1**
(45) Date of publication and mention of the grant of the patent: **18.11.2026**
(21) Application number: 19214330.3
(22) Date of filing: 09.12.2019
(51) Int. Cl.: D21D 5/02

(54) **A SCREENING DEVICE**
SIEBVORRICHTUNG
DISPOSITIF DE CRIBLAGE

(30) Priority: 31.01.2019 FI 20195063
(43) Date of publication of application: 05.08.2020
(73) Proprietor: Valmet Technologies Oy, 02150 Espoo (FI)
(72) Inventor: AHO, Tuomo, 33400 Tampere (FI); HEIKKILÄ, Jarno, 37600 Valkeakoski (FI)
(74) Representative: Berggren Oy

(56) References cited:
- WO-A1-94/16141
- US-A- 2 246 669
- US-A- 5 048 765
- US-A1- 2007 114 157

## Description

The invention relates generally to producing fiber webs. Particularly the invention relates to a screening device for screening pulp suspensions according to the preamble of claim 1.

As known from the prior art in fiber web machines, especially in paper and board machines, the fiber web is produced and treated in an assembly formed by a number of apparatuses arranged consecutively in a process line. A typical production and treatment line comprises a forming section comprising a head box and a forming unit and a press section as well as a subsequent drying section and a reel-up. The production and treatment line can further comprise other devices and sections for finishing the fiber web, for example, a size press, a calender, a coating section. The production and treatment line also comprises typically at least one winder for forming customer rolls as well as a roll packaging apparatus.

Before the head box pulp suspensions comprising recycled or virgin fiber are treated to be fed into the head box to be used to produce the fiber webs. A treatment system of the pulp suspensions for example comprises a pulping section, a deashing system, a coarse screening section, a centrifugal cleaning section, a fractionation section, a fine screening system, a fiber thickening system and fiber refining systems.

Screening is used for removing stickies, dirt specks and other impurities from the pulp suspension and for maximizing accept pulp quality and for ensuring constant runnability of the fiber web production process and for minimizing fiber losses in the pulp suspension treatment before the forming section and for minimizing breakdown of impurities and for protecting following process stages in the fiber web production. Screening is used in connection with pulp suspension treatment for pulp suspension comprising recycled fiber and/or virgin fiber. In treatment of pulp suspensions comprising recycled fiber screening is used in OCC line screening processes, in **DIP** line screening processes and in stock preparation. In treatment of pulp suspensions comprising virgin fiber screening is used in chemical pulping, mechanical pulping and in stock preparation. Depending on type of the impurity composition of the pulp suspension varies but generally impurities to be removed by screening are metals, sand, plastics, rubber, waxes, glass, stickies, ink, bark, pitch, shives, knots, rust, chemicals, robe and/or fiber bundles.

In the screening different types of screening devices are used. Main types of screening devices can be divided to coarse screens, fine screens, machine screens and broke screens. The present invention relates especially to machine screens, which are typically the last screening devices used to screen the pulp suspensions and to prepare the stocks before the forming sections and the head boxes thereof in the fiber web production lines.

The screening device, or the screen, comprises as main components inside a housing a screening cylinder and a rotor located and rotating inside the screening cylinder, which thus forms a housing around the screening cylinder. A commonly used screen type comprises the screening cylinder provided with a cylindrical screening surface equipped with apertures for screening pulp. The apertures in the screening surface may be e.g. circular or elongated holes, or mutually parallel slots provided in the surface of the screening cylinder. A screen equipped with a screening cylinder typically further includes a rotor arranged inside the cylindrical screening surface for rotating the pulp in the screen and foils or blades supported against the frame of the rotor such that when the rotor rotates, the blades produce on the screening surface a pressure pulse on account of which reject pulp and fibers collected onto the screening surface become released from the screening surface and return to the pulp suspension. In screening devices, the rotor is used to cause the pulp suspension to flow and to create the pressure pulse so that the pulp suspension is flown from the accept side to the feed side of the screening surface of the screening cylinder and to keep the screening surface clean.

In screening devices, the pulp suspension or the stock in stock preparation is fed into the screening cylinder inside the housing. In screening devices with inlet flow through an inlet fitting connected and ending to an inlet opening arranged to the cylindrical surface of a cylindrical part of the housing surrounding the screening cylinder or to a top part of the housing closing and covering the feed chamber of the screening device. Inlet flow to the screening cylinder is guided by the inlet fitting first to the feed chamber of the screening device of the screening space of the screening cylinder i.e. the rotor and foil area and there from to the screening space for screening. In screening devices with inlet types known from prior art there has been difficulties to create stabile inlet flow as the flow from the inlet fitting ending at the inlet opening causes disturbances and instability in the flow patterns, inlet flow and flow towards the rotor and foil area, already flowing inside the feed chamber of the screening device, when meeting these flows. This makes it also difficult to control the inlet flow and its speed as the instability causes speed and acceleration variations in the flow and may also cause a turbulences and disturbances to the flow pattern in the screening space of the screening device.

**In** patent publication US2246669 is disclosed a pulp screening apparatus of the "Quiller" type comprising a stationary cylindrical screen through which the pulp suspension is passed, an impeller comprising a plurality of impeller blades fixed to a hub mounted on a rotary impeller shaft extending axially through said screen and a casing enclosing said screen, which casing is provided with a pulp inlet.

**In** patent publication US5048765 is disclosed a paper material refining apparatus comprising a tank having upper and lower portions, a drum-type screen plate vertically situated at the lower portion of the tank, said screen plate dividing the tank into a primary chamber and a secondary chamber outside the screen plate, a drum-type rotor vertically situated at the lower portion of the tank and arranged to be rotated along a vertical axis thereof, a material supply pipe for supplying a paper making material into said primary chamber, said material supply pipe having an end located adjacent to the top plate of the rotor.

**In** patent application publication US2007/114157 is disclosed a screening apparatus for screening pulp suspensions comprising a housing, a screen basket including a first side and a second side having a tubular mantle wall with screen apertures, an inlet member for supplying a suspension to be screened to one of said first and second sides of said screen basket.

An object of the invention is to create a screening device, in which the disadvantages and problems of prior art are eliminated or at least minimized.

**In** particular an object of the invention is to provide a new type of screening device, in which problems relating to the stability of the flow patterns in the screening device are eliminated or at least minimized.

**In** order to achieve the above-mentioned objects and those that come apparent later the screening device according to the invention is mainly characterized by the features of the characterizing clause of claim 1. Advantageous embodiments and features are disclosed in the dependent claims.

According to the invention the screening device for screening pulp suspensions and/or for stock preparation comprises a screening cylinder and an inside the screening cylinder located rotor with foils connected to the rotor by foil arms, which screening device comprises an inlet fitting and a feed chamber of the screening cylinder into which inlet flow of the pulp suspension is guided through the inlet fitting, which screening device comprises a housing comprising a cylindrical part, which housing has an inlet opening for the inlet fitting, wherein the screening device comprises a flow guide extending from the inlet opening in the housing of the screening device a distance inside the screening device and the flow guide inside the feed chamber of the screening device guides the inlet flow into the feed chamber of the screening device and prevents the incoming inlet flow to meet the inlet flow already in the feed chamber of the screening device. as the flow guide inside the feed chamber of the screening device guides the inlet flow into the screening device and prevents the incoming inlet flow to meet the inlet flow already in the feed chamber of the screening device and thus the inlet flow remains stable.

According to an advantageous feature of the invention the flow guide is positioned tangentially in respect of the circumference of the cylindrical part of the housing. The tangential positioning of the flow guide provides for the inlet flow to smoothly follow the circumference of the housing.

According to an advantageous feature of the invention the flow guide is positioned semitangentially in respect of the circumference of the cylindrical part of the housing. The semitangential positioning of the flow guide provides for the inlet flow to smoothly follow the circumference of the housing.

According to the invention the flow guide inside the feed chamber of the screening device forms a blocking radius extending to a distance from the circumference of cylindrical part of the housing that is smaller than the radius of the housing. The blocking radius prevents the incoming inlet flow to meet the inlet flow already in the feed chamber of the screening device.

According to an advantageous feature of the invention the housing comprises a cover part of the feed chamber and a cylindrical part and that the flow guide is positioned through the cylindrical part or through the cover part of the feed chamber or through the cover part of the feed chamber and the cylindrical part.

According to an advantageous feature of the invention end of the flow guide inside the feed chamber is straight or inclined.

According to an advantageous aspect of the invention the flow guide is configured as a part of the inlet fitting extending a distance inside the feed chamber. According to an advantageous feature of the invention the part of the inlet fitting inside the feed chamber has only a partial wall of a pipe formed wall of the inlet fitting. According to an advantageous feature of the invention the partial wall of the part of the inlet fitting inside the feed chamber covers only lower part of the part. According to an advantageous feature of the invention the screening device comprises a guide plate arranged on outer surface of the inlet fitting. The guide plate supports the part of the inlet fitting inside the feed chamber of the screening device from bending and prevents by the flow caused wear of the part of the inlet fitting inside the feed chamber of the screening device.

According to an advantageous aspect of the invention the flow guide is configured as a guide plate extending inside the feed chamber from the inlet opening.

The guide plate provides a guiding effect to the inlet flow already in the feed chamber of the screening device away from the incoming inlet flow and towards the screening space in the rotor and foil area inside the cylindrical part of the housing.

As is clear from the above by the screening device according to the invention and many advantages are achieved and especially stabile flow patterns are achieved in the screening device. The inlet flow and its speed to the screening device as is controllable well as the flow pattern in the feed chamber of the screening device and in the screening space is stable. In the screening device according to the invention the tangential or semitangential inlet flow does not meet the inlet flow already created inside the feed chamber of the screening device and thus no disturbances or instability is caused. As the stabile inlet flow in the feed chamber of the screening device is achieved by the invention, also the flow pattern of the rotor and foil area of the screening device i.e. of the screening space is more stable and uniform and thus foil pulses in the flow pattern of the screening space are not disturbed and stability in foil pulses is thus also achieved. This enables to optimize efficiency of the feed side of the screening device as the flows of the feed chamber are stabilized and have a uniform distribution. Thus, also lowering the rotating speed of the rotor and further energy savings and/or more efficient screening can be achieved.

In the following the invention is explained in detail with reference to the accompanying drawing to which the invention is not to be narrowly limited.

In figure 1 is shown schematically an advantageous example of a screening device according to the invention.

In figure 2 is shown schematically seen from above an advantageous example of a feed chamber of a screening device according to the invention.

In figure 3 is shown schematically seen from above an advantageous example of a feed chamber of a screening device according to the invention.

In figures 4A-4D is shown schematically seen from above some advantageous examples of inlet fittings and their positions in screening devices according to the invention.

In figure 5 is shown schematically an advantageous example of a cover part of the feed chamber of a screening device according to the invention.

In figures 6A-6I is shown schematically seen from side of inlet fittings and their positions in screening devices according to the invention.

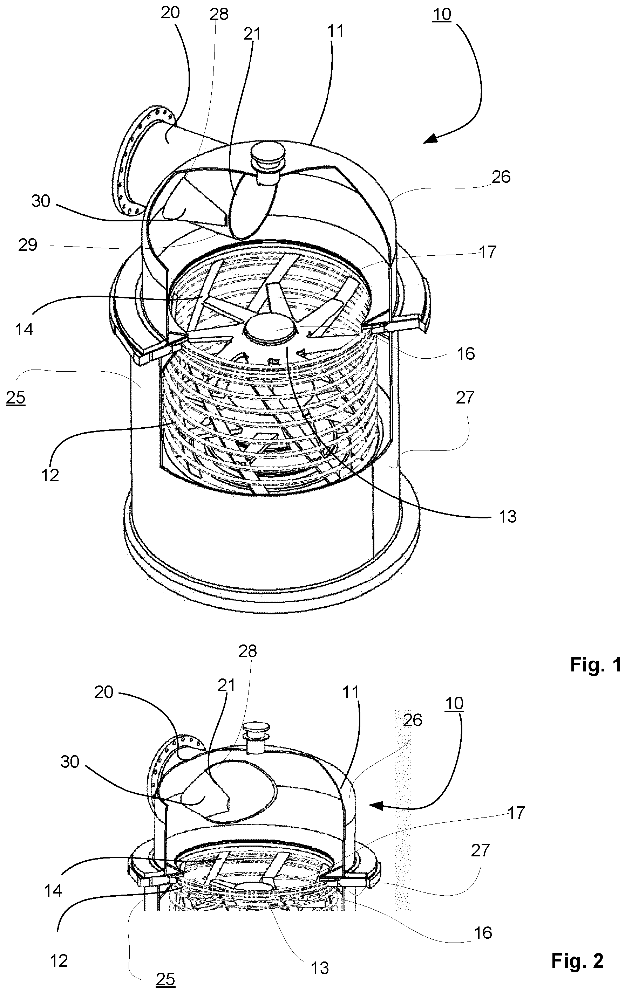

During the course of the following description relating to figures 1 - 6I like numbers and signs will be used to identify like elements according to the different views which illustrate the invention and its advantageous examples. In the figures some repetitive reference signs have been omitted for clarity reasons.

In figure 1 an example of a screening device 10, for example a machine screen 10, according to the invention is shown, which comprises a screening cylinder 12 and a rotor 13 located and rotating inside the screening cylinder 12. The rotor 13 comprises a hub 16 to be connected to a motor or like providing power for the rotational movement of the rotor 13. The screening cylinder 12 is cylindrical and its surface comprises apertures, for example circular or elongated holes, or mutually parallel slots provided in the surface of the screening cylinder 12 for passing through accept of the pulp suspension during screening or of the stock during stock preparation. The rotor 13 arranged inside the cylindrical screening cylinder 12 is for rotating the stock in the screening device 10 in the screening space located between the inner surface of the screening cylinder and the outer surface of a rotor body 12 of the rotor 13. In the screening space i.e. in the rotor and foil area of the screening device foils 14 are located. The foils 14 of the rotor 13, when the rotor 13 rotates, produce on the screening cylinder 12 a pressure pulse on account of which reject pulp and fibers collected onto the screening surface become released from the screening surface and return to the pulp suspension and accept pulp is flown through the apertures of the screening cylinder 12. The foils 14 are attached to the foil arms 17 of the rotor 13. The foils 14 extend in longitudinal direction substantially over the longitudinal length of the rotor 13 and the screening cylinder 12. The screening device 10 also comprises a feed chamber 11 located in connection with the screening cylinder 12, into which feed chamber 11 the inlet flow of the pulp suspension and/or the stock for stock preparation is guided via an inlet fitting 20 through an inlet opening 28. The screening device also comprises as outer frame a housing 25 with a cylindrical part 27 surrounding the screening cylinder 12 and the rotor 13 and foil 17 area. The housing 25 also comprises a cover part 26 of the feed chamber provided on and covering the feed chamber 11 of the screening device 10 and attached, typically openable, to the cylindrical part 27 of the housing 25. The cover part 26 and the cylindrical part 27 of the housing 25 may also be of same body. The screening device 10 also comprises a flow guide, which in the example of figure 1 is formed as an inside the feed chamber 11 extending part 29 of the inlet fitting 20 for the inlet flow into the screening device 10. In the example of figure 1 the inlet fitting 20 is arranged in the feed chamber 11 of the screening device 10 to the cover part 26 of the housing 25. To form the flow guide the inlet fitting 20 extending through the inlet opening 28 in the cover part 26 of the housing 25 from outside the screening device 10 and extends a distance inside the screening device 10. The part 29 of the inlet fitting 20 inside the feed chamber 11 of the screening device 10 forms the flow guide and guides the inlet flow into the screening device and prevents the incoming inlet flow to meet the inlet flow already in the feed chamber 11 of the screening device and thus the inlet flow remains stable. The part 29 of the inlet fitting 20 inside the feed chamber 11 of the screening device 10 comprises in this example also a guide plate 30 arranged on the outer surface of the inlet fitting 20 also guiding the inlet flow already in the feed chamber 11 of the screening device 10 away from the incoming inlet flow and towards the screening space in the rotor 13 and foil 14 area inside the cylindrical part 27 of the housing 25. The guide plate 30 may have a wedge- or sail-type shape and an increasing height and/or width form the end of the inlet fitting towards the outer circumference of the feed chamber 11 and towards the housing 25. The guide plate 30 also supports the part 29 of the inlet fitting 20 inside the feed chamber 11 of the screening device 10 from bending and prevents by the flow caused wear of the part 29 of the inlet fitting 20 inside the feed chamber 11 of the screening device 20. The flow guide can also be formed without the guide plate 30 i.e. only by the part 29 of the inlet fitting 20 extending inside the feed chamber 11.

In figure 2 an example of a screening device 10, for example a machine screen 10, according to the invention is shown, which comprises a screening cylinder 12 and a rotor 13 located and rotating inside the screening cylinder 12. The rotor 13 comprises a hub 16 to be connected to a motor or like providing power for the rotational movement of the rotor 13. The screening cylinder 12 is cylindrical and its surface comprises apertures, for example circular or elongated holes, or mutually parallel slots provided in the surface of the screening cylinder 12 for passing through accept of the pulp suspension during screening or of the stock during stock preparation. The rotor 13 arranged inside the cylindrical screening cylinder 12 is for rotating the stock in the screening device 10 in the screening space located between the inner surface of the screening cylinder and the outer surface of a rotor body 12 of the rotor 13. In the screening space i.e. in the rotor and foil area of the screening device foils 14 are located. The foils 14 of the rotor 13, when the rotor 13 rotates, produce on the screening cylinder 12 a pressure pulse on account of which reject pulp and fibers collected onto the screening surface become released from the screening surface and return to the pulp suspension and accept pulp is flown through the apertures of the screening cylinder 12. The foils 14 are attached to the foil arms 17 of the rotor 13. The foils 14 extend in longitudinal direction substantially over the longitudinal length of the rotor 13 and the screening cylinder 12. The screening device 10 also comprises a feed chamber 11 located in connection with the screening cylinder 12, into which feed chamber 11 the inlet flow of the pulp suspension and/or the stock for stock preparation is guided via and inlet opening 28 and an inlet fitting 20 ending at the inlet opening 28. The screening device also comprises as outer frame a housing 25 with a cylindrical part 27 surrounding the screening cylinder 12 and the rotor 13 and foil 17 area. The housing 25 also comprises a cover part 26 of the feed chamber provided on and covering the feed chamber 11 of the screening device 10 and attached, typically openable, to the cylindrical part 27 of the housing 25. The cover part 26 and the cylindrical part 27 of the housing 25 may also be of same body. The screening device 10 also comprises a flow guide, which in the example of figure 2 is formed as an inside the feed chamber 11 extending guide plate 30. In the example of figure 2 the guide plate 30 is located at the inlet opening 28 in the cover part 26 of the housing 25. The guide plate 30 extends from the inlet opening 28 in the cover part 26 of the housing 25 and extends a distance inside the screening device 10. The guide plate 30 inside the feed chamber 11 of the screening device 10 guides the inlet flow into the screening device and prevents the incoming inlet flow to meet the inlet flow already in the feed chamber 11 of the screening device and thus the inlet flow remains stable. The guide plate 30 also guides the inlet flow already in the feed chamber 11 of the screening device 10 away from the incoming inlet flow and towards the screening space in the rotor 13 and foil 14 area inside the cylindrical part 27 of the housing 25. The guide plate 30 may have a wedge- or sail-type shape and an increasing height and/or width form towards the outer circumference of the feed chamber 11 and towards the housing 25 i.e. a decreasing height and/or width towards the center of the feed chamber.

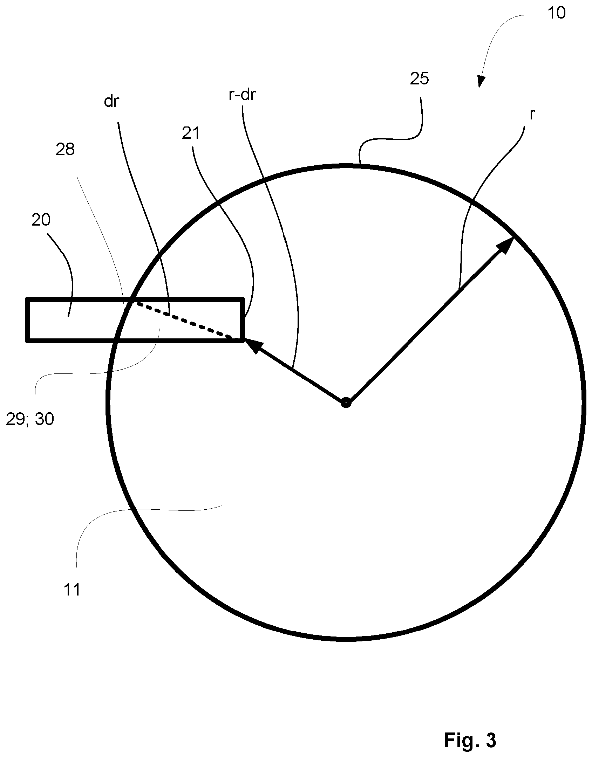

In figure 3 is shown an advantageous example of a feed chamber 11 of a screening device 10 surrounded by the housing 25, by the cylindrical part 27 or by the cover part 26 of the housing 25. The flow guide 29, 30 extends through an inlet opening 28 in the housing 25 from outside the screening device 10 and extending a distance inside the screening device 10. The flow guide 29, 30 inside the feed chamber 11 of the screening device 10 guides the inlet flow into the screening device and prevents the incoming inlet flow to meet the inlet flow already in the feed chamber 11 of the screening device and thus the inlet flow remains stable. As can be seen from the figure 3 the flow guide 29, 30 is not positioned centrally inside the housing 25 but instead in a semitangential or tangential position from the imaginary diameter of the housing 25 and providing a radius change of the flow guide 29, 30 inside the feed chamber 11 of the screening device 10 and creating a blocking radius dr extending to a distance of r-dr from the imaginary center point of the housing 25. The blocking radius dr prevents the incoming inlet flow to meet the inlet flow already in the feed chamber 11 of the screening device 10. The flow guide 29, 30 inside the feed chamber 11 of the screening device 10 forming the blocking radius dr extends to a distance from the circumference of the housing 25 that is smaller than the radius r of the housing 25.

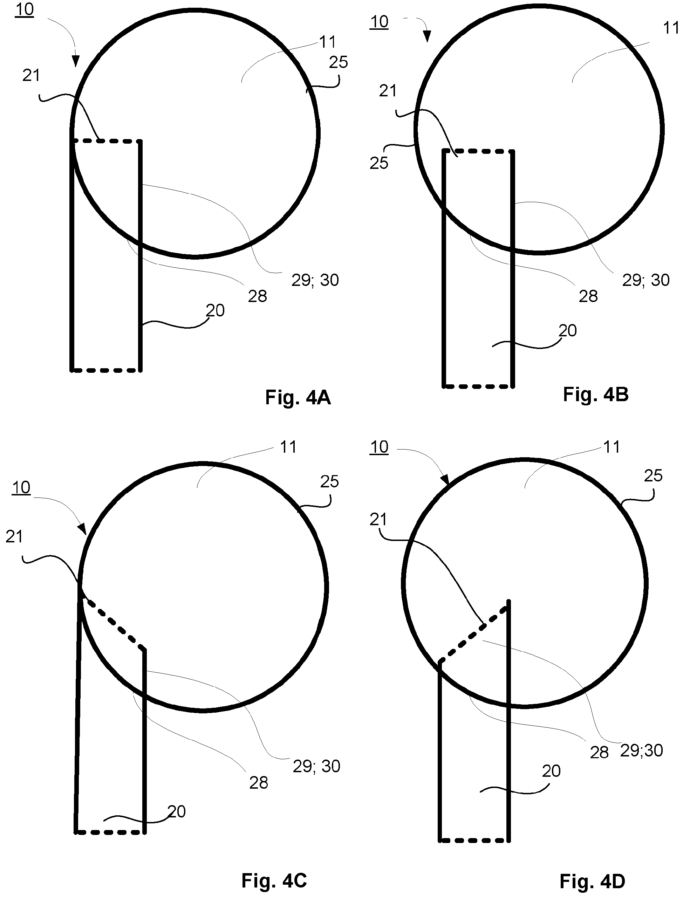

In figures 4A-4D is shown some advantageous examples of flow guides 29, 30 and their positions in screening devices 10. In the example of figure 4A the flow guide 29, 30 extends inside the feed chamber 11 of the screening device 10 tangentially such that the flow guide 29, 30 inside the feed chamber 11 of the screening device 10 is tangentially positioned in respect of the circumference of the housing 25. The end 21 of the flow guide 29, 30 inside the feed chamber 11 is straight. In the example of figure 4B the flow guide 29, 30 extends inside the feed chamber 11 of the screening device 10 semitangentially towards the center of the feed chamber of the screening device 10 such that the flow guide 29, 30 inside the feed chamber 11 of the screening device 10 is semitangentially positioned in respect of the circumference of the housing 25. The end 21 of the flow guide 29, 30 inside the feed chamber 11 is straight. In the example of figure 4C the flow guide 29, 30 extends inside the feed chamber 11 of the screening device 10 tangentially such that the flow guide 29, 30 inside the feed chamber 11 of the screening device 10 is tangentially positioned in respect of the circumference of the housing 25. The end 21 of the flow guide 29, 30 inside the feed chamber 11 is inclined towards the circumference of the housing 25. In the example of figure 4D the flow guide 29, 30 extends inside the feed chamber 11 of the screening device 10 semitangentially towards the center of the feed chamber of the screening device 10 such that the flow guide 29, 30 inside the feed chamber 11 of the screening device 10 is semitangentially positioned in respect of the circumference of the housing 25. The end 21 of the flow guide 29, 30 inside the feed chamber 11 is inclined towards the center of the housing 25. The flow guide 29, 30 inside the feed chamber 11 can be substantially cylindrical i.e. pipe-like with substantially unchangeable diameter but it can also have an increasing or decreasing diameter as well as an increasing or decreasing height and/or width on the length of the flow guide 29, 30 in case of a substantially non-cylindrical shape.

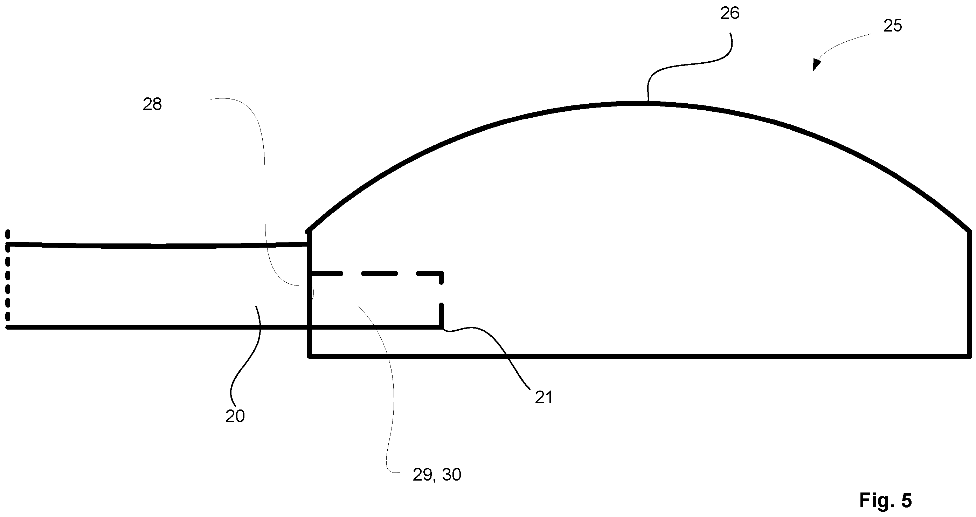

In figure 5 is shown an example of the cover part 26 of the housing 25 of the screening device. The flow guide 29, 30 extends from an inlet opening 28 in the cover part 26 of the housing 25 and extends a distance inside the screening device forming the flow guide 29, 30 inside the feed chamber 11 of the screening device. In this example the flow guide 29, 30 inside the feed chamber 11 has only as a partial wall formed flow guide 29, 30.

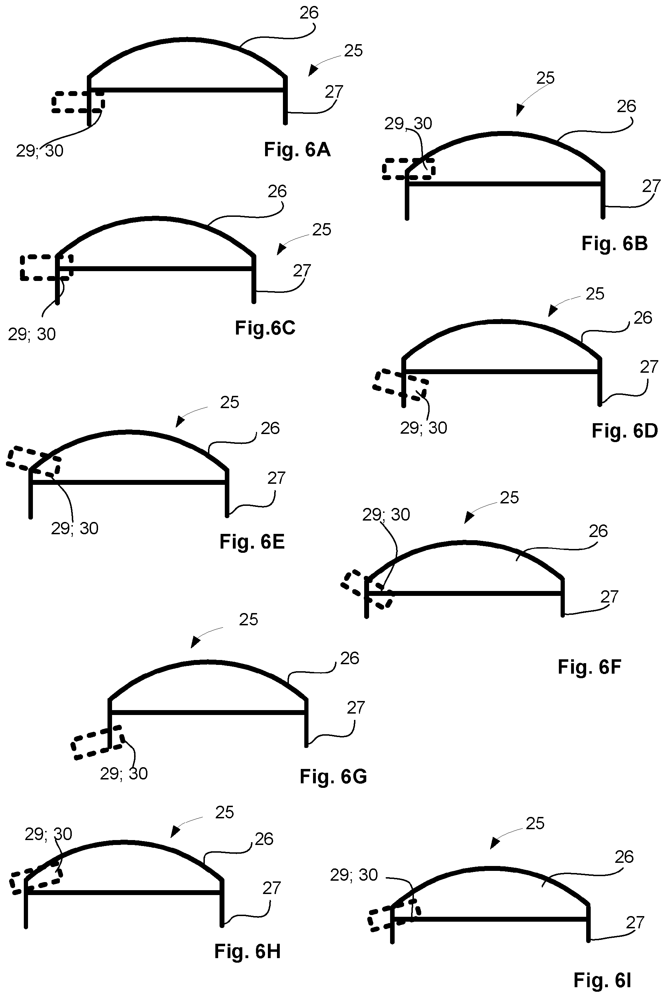

In figures 6A-6I is shown flow guides 29, 30, parts 29 of inlet fittings 20 and/or guide plates 30 and their positions in screening devices 10. In figure 6A the part 29 of the inlet fitting 20 and/or the guide plate 30 is positioned at the cylindrical part 27 of the housing 25, in the feed chamber of the cylindrical part 27 next to the cover part 26 of the housing 25. In figure 6B the part 29 of the inlet fitting 20 and/or the guide plate 30 is positioned at the cover part 26 of the housing 25. In figure 6C the part 29 of the inlet fitting 20 and/or the guide plate 30 is positioned at the cover part 26 of the feed chamber and the cylindrical part 27 of the housing 25. In figures 6A-6C the part 29 of the inlet fitting 20 and/or the guide plate 30 is in substantially perpendicular position in relation to the cylindrical direction of the housing 25. In figure 6D the part 29 of the inlet fitting 20 and/or the guide plate 30 is positioned at the cylindrical part 27 of the housing 25, in the feed chamber of the cylindrical part 27 next to the cover part 26 of the housing 25. In figure 6E the part 29 of the inlet fitting 20 and/or the guide plate 30 is positioned at the cover part 26 of the housing 25. In figure 6F the part 29 of the inlet fitting 20 and/or the guide plate 30 is positioned at the cover part 26 and the cylindrical part 27 of the housing 25. In figures 6D-6F the part 29 of the inlet fitting 20 and/or the guide plate 30 is inclined in respect of the cylindrical direction of the housing 25 such, that inlet flow via the flow guide 29, 30 is substantially directed towards the screening space inside the cylindrical screening cylinder 12 (fig. 1 or fig. 2). In figure 6G the inlet fitting 20 and/or the guide plate 30 is positioned at the cylindrical part 27 of the housing 25, in the feed chamber of the cylindrical part 27 next to the cover part 26 of the housing 25. In figure 6H the inlet fitting 20 and/or the guide plate 30 is positioned at the cover part 26 of the housing 25. In figure 6I the inlet fitting 20 and/or the guide plate 30 is positioned at the cover part 26 and the cylindrical part 27 of the housing 25. In figures 6G-6I the inlet fitting 20 and/or the guide plate 30 is inclined in respect of the cylindrical direction of the housing 25 such, that inlet flow via the flow guide 29, 30 is substantially directed towards the feed chamber 11 from the screening space inside the cylindrical screening cylinder 12 (fig. 1 or fig. 2).

In the description in the foregoing, although some functions have been described with reference to certain features, those functions may be performable by other features whether described or not. Although features have been described with reference to certain embodiments or examples, those features may also be present in other embodiments or examples whether described or not.

## Claims

1. Screening device for screening pulp suspensions and/or for stock preparation, which screening device (10) comprises a screening cylinder (12) and an inside the screening cylinder (12) located rotor (13) with foils (14) connected to the rotor (13) by foil arms (17), which screening device (10) comprises an inlet fitting (20) and a feed chamber (11) of the screening cylinder (12) into which inlet flow of the pulp suspension is guided through the inlet fitting (20), which screening device (10) comprises a housing (25) comprising a cylindrical part (27) which housing (25) has an inlet opening (28) for the inlet fitting (20), which screening device (10) comprises a flow guide (29, 30) extending from the inlet opening (28) in the housing (25) of the screening device (10) a distance inside the screening device (10) and the flow guide (29, 30) inside the feed chamber (11) of the screening device (10) guides the inlet flow into the feed chamber of the screening device (10) **characterized in that** the flow guide (29, 30) inside the feed chamber (11) of the screening device (10) forms a blocking radius (dr) extending to a distance from the circumference of the housing (25) that is smaller than the radius (r) of the cylindrical part (27) of the housing (25) and prevents the incoming inlet flow to meet the inlet flow already in the feed chamber (11) of the screening device (10).

2. Screening device according to claim 1, **characterized in that** the flow guide (29, 30) is positioned tangentially in respect of the circumference of the cylindrical part (27) of the housing (25).

3. Screening device according to claim 1 or 2, **characterized in that** the flow guide (29, 30) is positioned semitangentially in respect of the circumference of the cylindrical part (27) of the housing (25).

4. Screening device according to any of claims 1 - 3, **characterized in that** the housing (25) comprises a cover part (26) and a cylindrical part (27) and that the flow guide (29, 30) is positioned through the cylindrical part (27) or through the cover part (26) or through the cover part (26) and the cylindrical part (27).

5. Screening device according to any of claims 1 - 4, **characterized in that** the flow guide (29, 30) is substantially cylindrical with substantially unchangeable diameter or substantially non-cylindrical having an increasing or decreasing diameter as well as an increasing or decreasing height and/or width on length of the flow guide (29, 30) and that end (21) of the flow guide (29, 30) inside the feed chamber (11) is straight or inclined.

6. Screening device according to any of claims 1 - 5, **characterized in that** the flow guide (29) is configured as a part of the inlet fitting (20) extending inside the feed chamber.

7. Screening device according to claim 6, **characterized in that** the part (29) of the inlet fitting (20) inside the feed chamber (11) has only a partial wall of a pipe formed wall of the inlet fitting (20).

8. Screening device according to claim 7, **characterized in that** the partial wall of the part (29) of the inlet fitting (20) inside the feed chamber (11) covers only lower part of the part (29).

9. Screening device according to any of claims 6 - 8, **characterized in that** the screening device (10) comprises a guide plate (30) arranged on outer surface of the inlet fitting (20).

10. Screening device according to claim 1, **characterized in that** the flow guide (30) is configured as a guide plate (30) extending inside the feed chamber (11) from the inlet opening (28).

## Patentansprüche

1. Sortiervorrichtung zum Sortieren von Pulpesuspensionen und/oder zur Stoffaufbereitung, wobei die Sortiervorrichtung (10) einen Sortierzylinder (12) umfasst und einen innerhalb des Sortierzylinders (12) angeordneten Rotor (13) mit Flügeln (14), die durch Flügelarme (17) mit dem Rotor (13) verbunden sind, wobei die Sortiervorrichtung (10) einen Einlassstutzen (20) und eine Zufuhrkammer (11) des Sortierzylinders (12) umfasst, in welche ein Einlassstrom der Pulpesuspension durch den Einlassstutzen (20) geleitet wird, wobei die Sortiervorrichtung (10) ein Gehäuse (25) umfasst, das einen zylindrischen Teil (27) umfasst, wobei das Gehäuse (25) eine Einlassöffnung (28) für den Einlassstutzen (20) aufweist, wobei die Sortiervorrichtung (10) eine Strömungsführung (29, 30) umfasst, die sich von der Einlassöffnung (28) in dem Gehäuse (25) der Sortiervorrichtung (10) über eine Distanz in das Innere der Sortiervorrichtung (10) erstreckt, und die Strömungsführung (29, 30) innerhalb der Zufuhrkammer (11) der Sortiervorrichtung (10) den Einlassstrom in die Zufuhrkammer der Sortiervorrichtung (10) leitet, **dadurch gekennzeichnet, dass** die Strömungsführung (29, 30) innerhalb der Zufuhrkammer (11) der Sortiervorrichtung (10) einen Blockierradius (dr) bildet, der sich bis zu einer Distanz vom Umfang des Gehäuses (25) erstreckt, die kleiner als der Radius (r) des zylindrischen Teils (27) des Gehäuses (25) ist, und verhindert, dass der ankommende Einlassstrom auf den Einlassstrom trifft, der sich bereits in der Zufuhrkammer (11) der Sortiervorrichtung (10) befindet.

2. Sortiervorrichtung nach Anspruch 1, **dadurch gekennzeichnet, dass** die Strömungsführung (29, 30) tangential in Bezug auf den Umfang des zylindrischen Teils (27) des Gehäuses (25) positioniert ist.

3. Sortiervorrichtung nach Anspruch 1 oder 2, **dadurch gekennzeichnet, dass** die Strömungsführung (29, 30) halbtangential in Bezug auf den Umfang des zylindrischen Teils (27) des Gehäuses (25) positioniert ist.

4. Sortiervorrichtung nach einem der Ansprüche 1 bis 3, **dadurch gekennzeichnet, dass** das Gehäuse (25) ein Abdeckungsteil (26) und einen zylindrischen Teil (27) umfasst und dass die Strömungsführung (29, 30) durch den zylindrischen Teil (27) oder durch das Abdeckungsteil (26) oder durch das Abdeckungsteil (26) und den zylindrischen Teil (27) positioniert ist.

5. Sortiervorrichtung nach einem der Ansprüche 1 bis 4, **dadurch gekennzeichnet, dass** die Strömungsführung (29, 30) im Wesentlichen zylindrisch mit im Wesentlichen unveränderlichem Durchmesser ist oder im Wesentlichen nicht-zylindrisch ist, aufweisend einen zunehmenden oder abnehmenden Durchmesser sowie eine zunehmende oder abnehmende Höhe und/oder Breite auf der Länge der Strömungsführung (29, 30), und dass das Ende (21) der Strömungsführung (29, 30) innerhalb der Zufuhrkammer (11) gerade oder geneigt ist.

6. Sortiervorrichtung nach einem der Ansprüche 1 bis 5, **dadurch gekennzeichnet, dass** die Strömungsführung (29) als ein Teil des Einlassstutzens (20) konfiguriert ist, der sich in das Innere der Zufuhrkammer erstreckt.

7. Sortiervorrichtung nach Anspruch 6, **dadurch gekennzeichnet, dass** der Teil (29) des Einlassstutzens (20) innerhalb der Zufuhrkammer (11) nur eine Teilwand einer rohrförmigen Wand des Einlassstutzens (20) aufweist.

8. Sortiervorrichtung nach Anspruch 7, **dadurch gekennzeichnet, dass** die Teilwand des Teils (29) des Einlassstutzens (20) innerhalb der Zufuhrkammer (11) nur den unteren Teil des Teils (29) abdeckt.

9. Sortiervorrichtung nach einem der Ansprüche 6 bis 8, **dadurch gekennzeichnet, dass** die Sortiervorrichtung (10) eine Führungsplatte (30) umfasst, die an der Außenfläche des Einlassstutzens (20) angeordnet ist.

10. Sortiervorrichtung nach Anspruch 1, **dadurch gekennzeichnet, dass** die Strömungsführung (30) als eine Führungsplatte (30) konfiguriert ist, die sich von der Einlassöffnung (28) in das Innere der Zufuhrkammer (11) erstreckt.

## Revendications

1. Dispositif de tamisage destiné au tamisage de suspensions de pâte à papier et/ou à la préparation de la pâte, lequel dispositif de tamisage (10) comprend un cylindre de tamisage (12) et un rotor (13) situé à l'intérieur du cylindre de tamisage (12), avec des ailettes (14) reliées au rotor (13) par des bras d'ailettes (17), lequel dispositif de tamisage (10) comprend un raccord d'entrée (20) et une chambre d'alimentation (11) du cylindre de tamisage (12), dans laquelle le flux d'entrée de la suspension de pâte à papier est guidé à travers le raccord d'entrée (20), lequel dispositif de tamisage (10) comprend un boîtier (25) comprenant une partie cylindrique (27), lequel boîtier (25) a une ouverture d'entrée (28) pour le raccord d'entrée (20), lequel dispositif de tamisage (10) comprend un guide de flux (29, 30) s'étendant à partir de l'ouverture d'entrée (28) dans le boîtier (25) du dispositif de tamisage (10) sur une distance à l'intérieur du dispositif de tamisage (10), et le guide de flux (29, 30) à l'intérieur de la chambre d'alimentation (11) du dispositif de tamisage (10) guide le flux d'entrée dans la chambre d'alimentation du dispositif de tamisage (10) **caractérisé en ce que** le guide de flux (29, 30) à l'intérieur de la chambre d'alimentation (11) du dispositif de tamisage (10) forme un rayon de blocage (dr) s'étendant à une distance de la circonférence du boîtier (25) qui est inférieure au rayon (r) de la partie cylindrique (27) du boîtier (25) et empêche le flux d'entrée entrant de rejoindre le flux d'entrée déjà dans la chambre d'alimentation (11) du dispositif de tamisage (10).

2. Dispositif de tamisage selon la revendication 1, **caractérisé en ce que** le guide de flux (29, 30) est positionné de manière tangentielle par rapport à la circonférence de la partie cylindrique (27) du boîtier (25).

3. Dispositif de tamisage selon la revendication 1 ou 2, **caractérisé en ce que** le guide de flux (29, 30) est positionné de manière semi-tangentielle par rapport à la circonférence de la partie cylindrique (27) du boîtier (25).

4. Dispositif de tamisage selon l'une quelconque des revendications 1 à 3, **caractérisé en ce que** le boîtier (25) comprend une partie de couvercle (26) et une partie cylindrique (27) et **en ce que** le guide de flux (29, 30) est positionné à travers la partie cylindrique (27) ou à travers la partie de couvercle (26) ou à travers la partie de couvercle (26) et la partie cylindrique (27).

5. Dispositif de tamisage selon l'une quelconque des revendications 1 à 4, **caractérisé en ce que** le guide de flux (29, 30) est sensiblement cylindrique avec un diamètre sensiblement constant ou sensiblement non cylindrique ayant un diamètre croissant ou décroissant ainsi qu'une hauteur et/ou une largeur croissantes ou décroissantes sur la longueur du guide de flux (29, 30), et **en ce que** l'extrémité (21) du guide de flux (29, 30) à l'intérieur de la chambre d'alimentation (11) est droite ou inclinée.

6. Dispositif de tamisage selon l'une quelconque des revendications 1 à 5, **caractérisé en ce que** le guide de flux (29) est conçu comme une partie du raccord d'entrée (20) s'étendant à l'intérieur de la chambre d'alimentation.

7. Dispositif de tamisage selon la revendication 6, **caractérisé en ce que** la partie (29) du raccord d'entrée (20) à l'intérieur de la chambre d'alimentation (11) n'a qu'une paroi partielle d'une paroi en forme de tuyau du raccord d'entrée (20).

8. Dispositif de tamisage selon la revendication 7, **caractérisé en ce que** la paroi partielle de la partie (29) du raccord d'entrée (20) à l'intérieur de la chambre d'alimentation (11) ne recouvre que la partie inférieure de la partie (29).

9. Dispositif de tamisage selon l'une quelconque des revendications 6 à 8, **caractérisé en ce que** le dispositif de tamisage (10) comprend une plaque de guidage (30) agencée sur une surface externe du raccord d'entrée (20).

10. Dispositif de tamisage selon la revendication 1, **caractérisé en ce que** le guide de flux (30) est conçu comme une plaque de guidage (30) s'étendant à l'intérieur de la chambre d'alimentation (11) à partir de l'ouverture d'entrée (28).
